# DEMANDE DE BREVET EUROPEEN

(11) **EP 0 534 029 A1**
(43) Date de publication de la demande: **31.03.1993**
(21) Numéro de dépôt: 91402586.1
(22) Date de dépôt: 27.09.1991
(51) Int. Cl.: C02F 1/46, C25D 21/20

(54) **Installation électrochimique et procédé de traitement d'effluents aqueux contenant un métal lourd**

(71) Demandeur: ELECTRICITE DE FRANCE Service National, F-75008 Paris (FR)
(72) Inventeur: Leclerc, Olivier, F-76000 Rouen (FR); Lahitte, Claude, F-92000 Nanterre (FR); Chhim, Norinda, F-75019 Paris (FR)
(74) Mandataire: Schrimpf, Robert

(57) **Abrégé**

Installation électrochimique pour le traitement d'effluents aqueux contenant un métal lourd, installation comprenant un réacteur d'électrodéposition dudit métal lourd, comportant une cuve dans laquelle sont placées de façon alternée des électrodes de polarité opposée, les cathodes étant des électrodes volumiques amovibles constituées respectivement par une cassette (10) formée de deux cadres (11, 12) disposés en regard et supportant, chacun, une paroi perméable (21, 19) auxdits effluents aqueux, les parois perméables d'une même cathode délimitant un espace rempli d'un matériau granulaire actif et dans lequel est disposée une grille métallique (20) d'amenée de courant.

Selon l'invention, le métal constituant ladite grille métallique (20) d'amenée de courant étant choisi parmi les métaux présentant un potentiel d'oxydo-réduction supérieur à celui dudit métal lourd à électrodéposer, ladite installation comprend en outre un réacteur électrochimique de régénération destiné à recevoir lesdites cathodes en position anodique.

Application à la dépollution des effluents aqueux par des rejets contenant des métaux lourds.

## Description

La présente invention concerne une installation électrochimique pour le traitement d'effluents aqueux contenant un métal lourd, ainsi qu'un procédé mettant en oeuvre cette installation.

La pollution des effluents aqueux par des rejets contenant des métaux lourds représente une part considérable des nuisances industrielles. On estime en effet que 30 % de la pollution industrielle est due au seul secteur du traitement de surface. De ce fait, les contraintes en matière d'environnement dans ce secteur d'activité sont de plus en plus sévères.

De nombreuses techniques de dépollution ont été développées : précipitation-filtration, traitement par des résines échangeuses d'ions, cémentation, osmose inverse, électrodéposition. Cette dernière technique a été particulièrement exploitée.

Il y a encore quelques années, la majorité des réacteurs électrochimiques utilisaient des électrodes se présentant sous la forme de plaque pleines aptes à travailler dans des milieux fortement concentrés en métal à électrodéposer. En revanche, de telles électrodes ne permettent pas d'obtenir en fin de traitement une concentration compatible avec les normes de rejet en vigueur. Ces électrodes sont généralement utilisées soit pour la préparation de différents métaux par électrosynthèse, soit dans le cas du traitement des effluents industriels, pour faire passer la concentration d'un effluent d'une valeur élevée (typiquement de l'ordre de plusieurs dizaines de grammes/litre) à une valeur permettant la mise en oeuvre de nouvelles cathodes adaptées à un fonctionnement en solution diluée en métal électroactif.

L'émergence progressive du génie électrochimique a contribué au développement de systèmes utilisant des cathodes volumiques particulièrement adaptées à la récupération de composés présents en faible concentration dans l'électrolyte. L'intérêt d'une telle cathode est de pouvoir proposer de grandes surfaces d'électrode par unité de volume ainsi que des vitesses de transfert de matière élevées.

On connaît du brevet US-A-4 226 685 notamment, un réacteur de traitement par électrodéposition d'effluents aqueux contenant un métal lourd, ledit réacteur comportant une cuve dans laquelle sont placées de façon alternée des électrodes de polarité opposée, les cathodes étant des électrodes volumiques amovibles constituées respectivement par une cassette formée de deux cadres disposés en regard et supportant, chacun, une paroi perméable auxdits effluents aqueux, les parois perméables d'une même cathode délimitant un espace rempli d'un matériau granulaire actif et dans lequel est disposée une grille métallique d'amenée de courant.

Les cathodes volumiques peuvent être de formes et de technologies multiples ; il existe par exemple des cathodes poreuses, fluidisées, pulsées, etc., chacune possédant des avantages spécifiques se résumant en général à un fonctionnement optimal dans une zone de concentration bien dédiée.

La principale difficulté rencontrée avec ces électrodes est que lorsqu'elles sont saturées en métal, il est nécessaire de procéder à un changement des cathodes volumiques, changement pouvant se traduire dans la majorité des cas par un démontage de l'électrolyseur, ce qui nuit à l'efficacité du procédé en raison d'un arrêt de l'opération d'électrodéposition. En effet, selon la technologie utilisée, ce reconditionnement du réacteur électrochimique peut être assez long. Par ailleurs, la cathode ou le matériau granulaire actif récupéré doit être retraité pour pouvoir recycler le métal extrait de l'effluent industriel. Dans la majorité des cas, ce traitement s'effectue dans un emplacement extérieur au site de traitement de l'effluent par électrodéposition.

Aussi, le problème technique à résoudre par l'objet de la présente invention est de réaliser une installation électrochimique pour le traitement d'effluents aqueux contenant un métal lourd comprenant un réacteur d'électrodéposition dudit métal lourd du type de celui décrit ci-dessus en référence au brevet US-A-4 226 685, réacteur dont les cathodes volumiques amovibles seraient facilement régénérables.

La solution au problème technique posé consiste, selon la présente invention, en ce que, le métal constituant ladite grille d'amenée de courant étant choisi parmi les métaux présentant un potentiel d'oxydoréduction supérieur à celui dudit métal lourd à électrodéposer, ladite installation comprend en outre un réacteur électrochimique de régénération destiné à recevoir lesdites cathodes en position anodique.

En effet, il est alors possible d'envisager un procédé de traitement d'un effluent aqueux contenant un métal lourd, caractérisé en ce qu'il consiste :
- à soumettre ledit effluent aqueux à une électrolyse dans un réacteur d'électrodéposition d'une installation électrochimique selon l'invention,
- à retirer les cathodes volumiques de ladite cuve, lorsque le matériau granulaire actif est saturé en métal lourd,
- à placer lesdites cathodes dans le réacteur électrochimique de régénération et les soumettre à un potentiel anodique de façon à résolubiliser ledit métal lourd et régénérer ledit matériau granulaire actif, le métal lourd résolubilisé étant récupéré sur des électrodes en position cathodique,
- et, après régénération, à placer à nouveau lesdites cathodes volumiques dans ledit réacteur d'électrodéposition.

Ainsi, en ajustant ledit potentiel anodique à une valeur comprise entre les potentiels d'oxydo-réduction du métal lourd et du métal de l'amenée de courant, il est possible d'obtenir que, lors de l'opération de régénération, seul le métal lourd déposé sur le matériau granulaire actif migre vers les cathodes dudit deuxième réacteur, et non le métal constituant la grille métallique d'amenée de courant.

Les avantages de l'installation électrochimique et du procédé de traitement selon l'invention sont multiples.

Du fait que les cathodes volumiques peuvent être régénérées, le coût de fonctionnement de l'installation de traitement est limité à la seule consommation d'électricité.

Les cathodes ne voient pas leurs performances chuter à mesure des cycles de régénération effectués. Une simple remise à niveau du lit granulaire, moins de 10 % en poids par rapport à la masse initiale de matériau, suffit à rendre les électrodes opérationnelles. Il n'est plus nécessaire, notamment dans le cas de grosses installations, de prévoir un stockage important en matériau granulaire actif, tel que le coke de pétrole pour alimenter les réacteurs de traitement.

Lors du colmatage de la cathode de l'installation selon l'invention, il n'est plus nécessaire de démonter l'électrode pour changer le lit granulaire chargé en métal lourd. Cette technique permet de réaliser des gains substantiels en temps d'intervention autour de l'installation de traitement électrochimique.

L'électrodéposition et la régénération des cathodes peuvent se faire sur le même emplacement, limitant de ce fait les transferts d'électrodes chargées et le temps d'intervention du personnel s'occupant de l'installation de traitement.

La régénération s'effectuant plus rapidement que la récupération par électrodéposition du métal lourd, il n'est donc nécessaire que de posséder deux jeux de cathodes. Pendant que l'un est en électrodéposition, l'autre est régénéré. Grâce à ce procédé, il est possible de faire fonctionner économiquement, en continu et avec efficacité l'installation de dépollution électrochimique.

Puisqu'il est possible de régénérer rapidement l'électrode, un des principaux inconvénients des cathodes volumiques à lit fixe ne se pose plus. En effet, dans le cas d'une électrolyse sur une solution concentrée, une cathode à lit fixe se colmate rapidement et devient de ce fait inopérationnelle. Si la régénération de l'électrode n'est pas possible, l'usage d'une cathode à lit fixe pour épurer une solution concentrée (supérieure à 1g/l en métal) est déconseillé car le processus sera rapidement bloqué. Dans le cas de l'invention, puisque l'électrode peut être régénérée en un court laps de temps et à proximité du premier réacteur de traitement, minimisant ainsi le coût du procédé, on peut envisager d'électrodéposer un métal à partir d'une solution concentrée en ion métallique. L'intérêt est qu'il n'est plus dans ce cas nécessaire d'utiliser deux types de réacteurs, un pour travailler en solution concentrée, l'autre en solution diluée.

Les électrodes pouvant être régénérées, il n'est plus utile de prévoir un stock de cathodes neuves pour alimenter l'installation de traitement électrochimique de l'invention.

La description qui va suivre en regard des dessins annexés, donnés à titre d'exemples non limitatifs, fera bien comprendre en quoi consiste l'invention et comment elle peut être réalisée.

La figure 1 est une vue de dessus d'un réacteur électrodéposition d'une installation électrochimique selon l'invention.

La figure 2 est une section selon AA du réacteur de la figure 1 sans électrodes.

La figure 3 est une section selon BB du réacteur de la figure 1.

La figure 4 est une vue partielle en perspective de la face interne d'une paroi verticale du réacteur.

La figure 5 représente en perspective un cadre d'une électrode du réacteur de la figure 1.

La figure 6 représente une vue éclatée d'une électrode du réacteur de la figure 1.

La figure 7 est une vue en perspective d'un reacteur électrochimique de régénération d'une installation électrochimique selon l'invention.

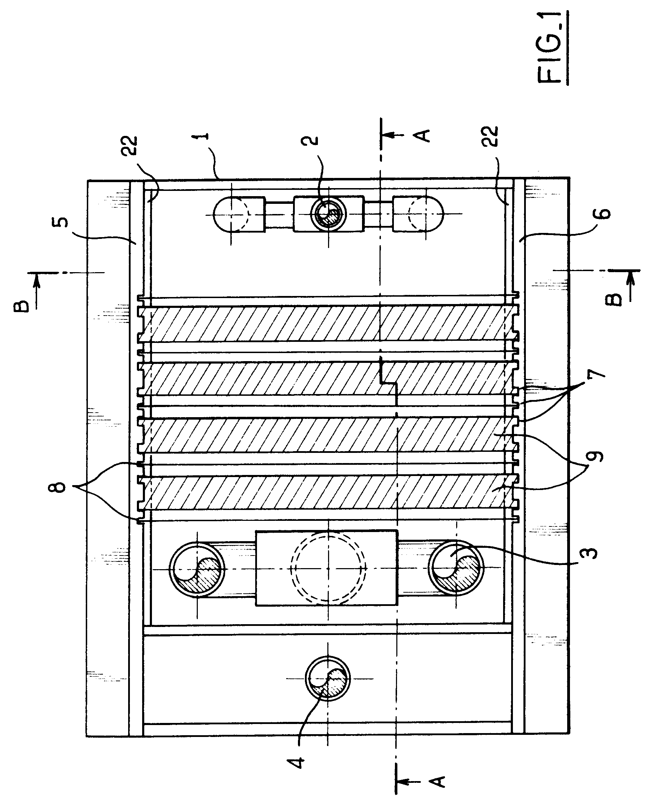

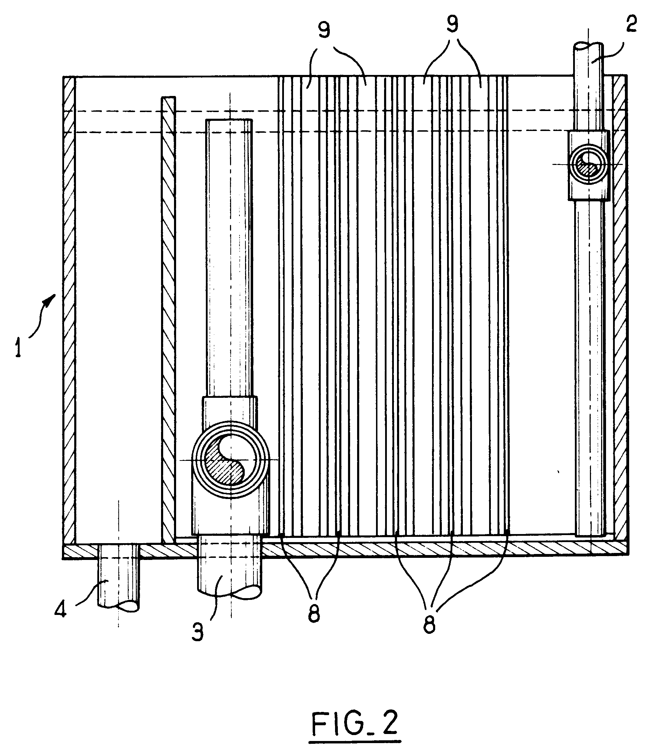

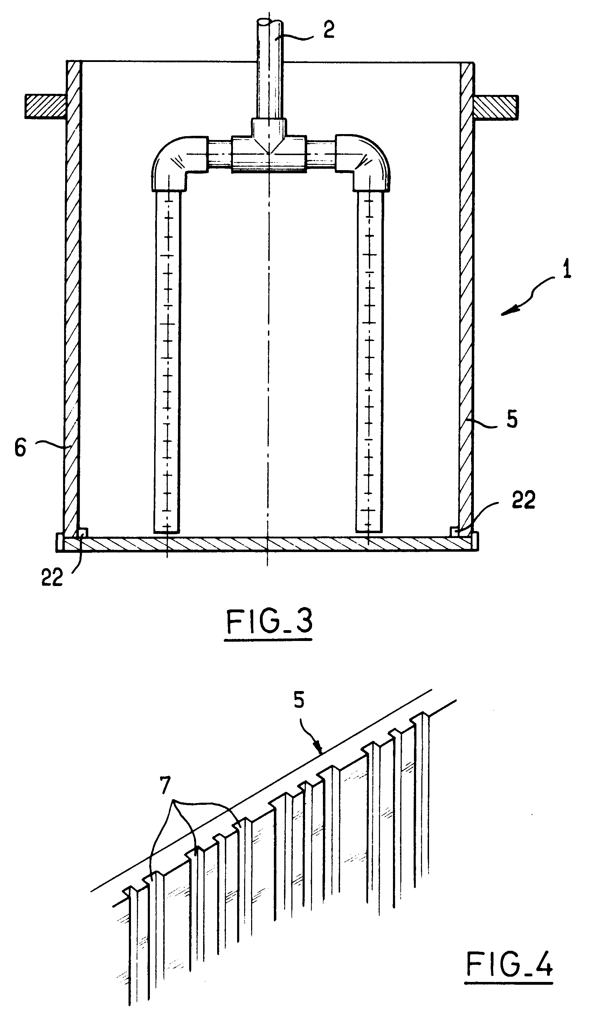

Un réacteur d'électrodéposition d'une installation de traitement d'effluents aqueux contenant un métal lourd, tel que représenté sur les figures 1 à 6, comporte une cuve 1 parallélépipédique munie d'un système 2 d'alimentation en liquide, à l'une de ses extrémités ; d'un collecteur de sortie 3 et d'un trop-plein de sécurité 4, à l'autre extrémité. Le système d'alimentation peut être un répartiteur hydraulique amovible tel que représenté sur la figure 3. Le débit d'alimentation est réglé par l'intermédiaire d'une vanne non représentée. L'évacuation de l'effluent se fait par la partie inférieure du réacteur. Le trop-plein permet d'assurer l'évacuation de l'effluent en cas de colmatage du collecteur de sortie 3. Les deux parois verticales opposées 5 et 6 sont munies, dans leur partie médiane, d'une série de rainures verticales 7 constituant les moyens permettant de monter les électrodes de façon amovible. Cette portion de paroi est illustrée plus précisément par la figure 2.

Des cathodes volumiques amovibles 9 et des anodes 8 sont installées dans la cuve de façon alternée.

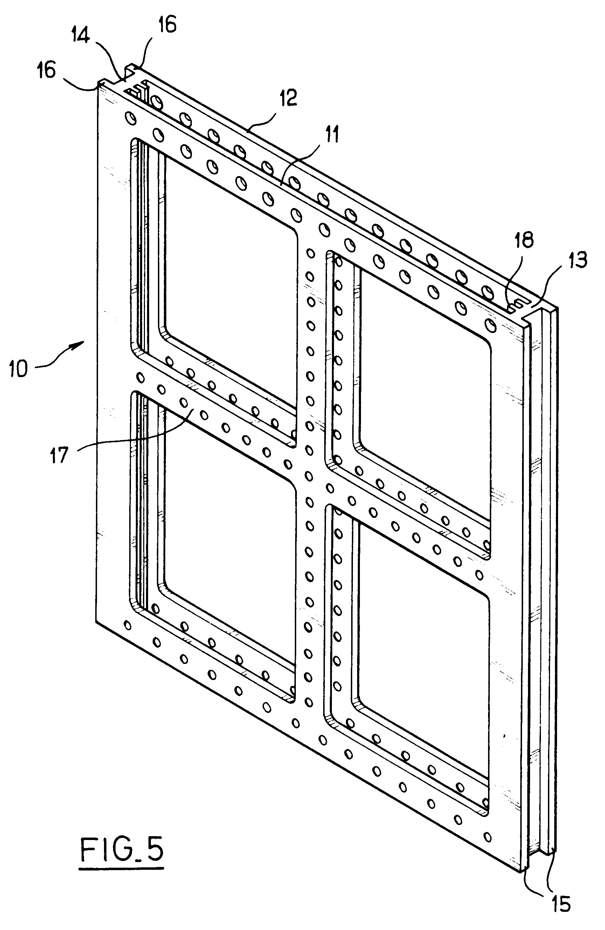

La figure 5 représente la cassette 10 d'une électrode amovible et démontable utilisée dans l'invention. Une telle cassette est constituée de deux cadres parallèles 11 et 12 reliés le long de leurs bords verticaux par des cloisons verticales 13 et 14. Ces cloisons sont situées en retrait par rapport aux bords verticaux des cadres 11 et 12 de manière à ménager des ergots 15 et 16 sur la face externe de ces cloisons 13 et 14.

Lors de l'installation de l'électrode dans la cuve, les ergots 15 et 16 coulissent dans les rainures 7 des parois de la cuve. Les dimensions et la position des rainures 7 de la cuve 1 sont, bien entendu, prévues de sorte à être complémentaires des ergots 15 et 16.

Dans la cassette présentée à la figure 5, chacun des cadres 11 et 12 est muni d'un croisillon 17. Ce croisillon est particulièrement utile pour les électrodes de grande taille, de manière à leur conférer une certaine rigidité. De préférence, le croisillon est ajouré régulièrement de façon à offrir au flux hydraulique une surface d'électrolyse maximale. Il peut être omis pour les électrodes de petite dimension.

Les cloisons 13 et 14 sont munies, chacune sur leurs faces internes respectives en regard, de trois rainures 18. Ces rainures 18 permettent d'installer, entre les cadres 11 et 12 de la cassette 10, successivement une première paroi perméable à l'effluent aqueux, une grille métallique d'amenée de courant, puis une deuxième paroi perméable identique à la première paroi perméable.

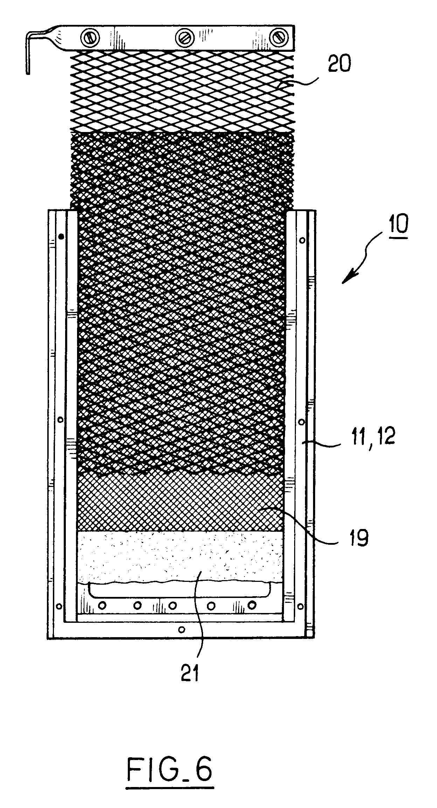

La figure 6 représente une électrode volumique démontable complète. Elle comporte une cassette 10 comportant des cadres ajourés 11 et 12 entre lesquels sont installés successivement une première paroi perméable constituée d'un assemblage géotextile 21 /grillage PVC 19, une grille d'amenée de courant formée par un déployé métallique 20, et un second assemblage géotextile/grillage PVC non représenté.

Les cassettes constituant le support des électrodes sont disposées sur des cales 22 pour éviter un phénomène de circulation en cascade à l'intérieur du réacteur.

Le géotextile utilisé est choisi dans un matériau poreux chimiquement résistant dans les conditions de l'électrolyse qui a lieu dans le réacteur d'électrodéposition, par exemple du Bidim (Marque déposée) dans le cas de l'électrorécupération du cuivre dans les bains de galvanoplastie.

Les parois perméables d'une même cathode délimitent un espace qui, outre la grille d'amenée de courant, est rempli d'un matériau granulaire actif. On peut utiliser des particules de carbone, d'un polymère organique conducteur, des granules du même métal que le métal à déposer. Toutefois, on choisira de préférence du coke de pétrole qui a l'avantage de présenter, sous un faible coût, une grande surface de contact et une bonne conductibilité électrique en lit granulaire. De plus, le coke de pétrole est utilisable aussi bien en position anodique que cathodique, ce qui est particulièrement favorable pour une utilisation dans l'installation électrochimique de traitement selon l'invention.

De façon à régénérer les cathodes volumiques après saturation du matériau granulaire actif en métal lourd, le métal constituant ladite grille métallique 20 d'amenée de courant est choisi parmi les métaux, tels le titane, présentant un potentiel d'oxydo-réduction supérieur à celui du métal lourd considéré, et l'installation de traitement comporte un réacteur de régénération destiné à recevoir lesdites cathodes volumiques en position anodique.

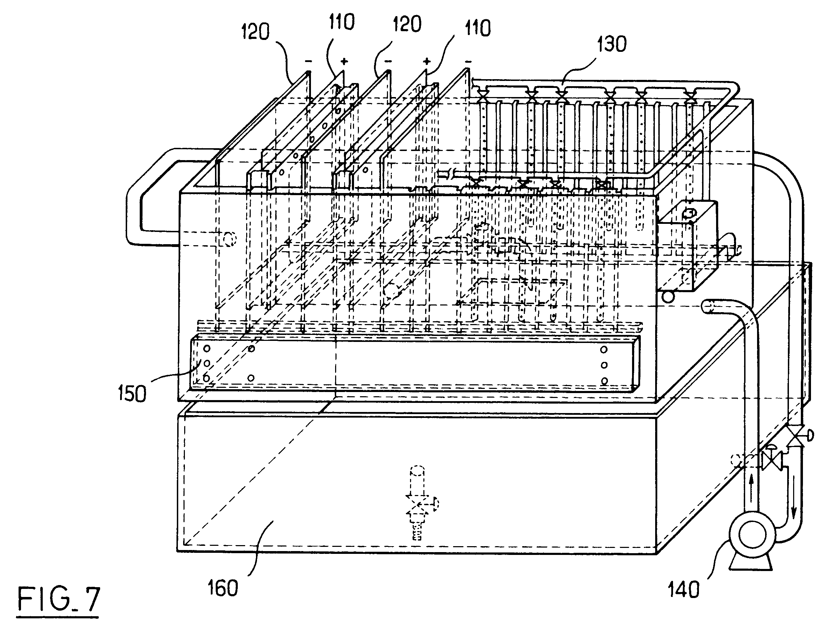

La figure 7 montre en perspective un réacteur électrochimique de régénération qui peut, dans l'installation de traitement, être accolé au réacteur d'électrodéposition. Le réacteur de régénération a une structure alternée d'électrodes 110, 120 analogue à celle du réacteur décrit en référence aux figures 1 à 4. Les cathodes 110 à régénérer, provenant du réacteur d'électrodéposition, sont placées en position d'anodes tandis que des cathodes 120 sont disposées en regard. Les cathodes 120 du réacteur de régénération sont choisies de préférence dans le même métal que le métal lourd extrait de l'effluent traité, par exemple du cuivre dans le cas où ledit métal lourd est du cuivre. Les cathodes 120 du réacteur de régénération peuvent être choisies sous la forme d'une plaque pleine puisque dans ce cas le métal sera présent en solution concentrée dans l'électrolyte (le métal électrodéposé lors du traitement de plusieurs dizaines de mètres cubes d'effluent se retrouve solubilisé dans un volume d'électrolyte de 100 litres). Au cours du traitement, les cathodes volumiques 110 sont soumises à un potentiel anodique qui a pour effet d'électrosolubiliser le métal présent. Les ions métalliques ainsi solubilisés se dirigent sous l'influence du champ électrique vers une plaque cathodique 120 où ils s'électrodéposent. Si le potentiel anodique a une valeur comprise entre les potentiels d'oxydoréduction du métal lourd à traiter et le métal de la grille d'amenée de courant des cathodes volumiques, ce dernier ne subit pas le phénomène d'électrodissolution et ladite grille d'amenée de courant n'est pas altérée. A mesure du déroulement de l'opération de régénération, le matériau granulaire actif de l'électrode volumique se décharge en métal et devient réutilisable dans le premier réacteur d'électrodéposition. Simultanément, la plaque métallique se charge en métal pur et peut être aisément recyclée. Par exemple, il a été réalisé plus de soixante cycles de régénération d'une électrode chargée de cuivre issu d'un bain de cuivrage électrolytique.

Comme on peut le voir à la figure 7, la cuve du réacteur de régénération comprend, entre les électrodes, un système 130 de bullage utilisé pour homogénéiser la solution et ainsi assurer un bon transfert de matière au niveau des électrodes. Une pompe 140 placée en niveau bas de la cuve assure un brassage de la solution permettant outre une amélioration du transfert de matière, une meilleure régulation thermique de la solution. Cette cuve est équipée sur le bas d'une des parois latérales d'une trappe 150 permettant d'éliminer les boues métalliques d'électrolyse lors du nettoyage du réacteur. Au cours de cette opération, l'électrolyte est transvasé dans un réceptacle 160 situé sous la cuve. Il est alors possible de retirer les cathodes 110 composées de la plaque pleine initiale et du dépôt métallique qui la recouvre (dans le cas d'une plaque d'une surface égale à plus de 2 kg de cuivre métallique peuvent être récupérés). On récupère via la trappe 150 le métal présent en fond de cuve. Une fois ce nettoyage effectué, il suffit de changer les cathodes 110 pleines et de réintroduire l'électrolyte dans la cuve au moyen de la pompe 140 de circulation. Le réacteur de régénération est alors à nouveau opérationnel. Il n'est pas nécessaire de réaliser cette opération de nettoyage de manière fréquente, une fois tous les soixante cycles précités suffit.

## Revendications

1. Installation électrochimique pour le traitement d'effluents aqueux contenant un métal lourd, installation comprenant un réacteur d'électrodéposition dudit métal lourd comportant une cuve dans laquelle sont placées de façon alternée des électrodes de polarité opposée, les cathodes (110) étant des électrodes volumiques amovibles constituées respectivement par une cassette (10) formée de deux cadres (11, 12) disposés en regard et supportant, chacun, une paroi perméable auxdits effluents aqueux, les parois perméables (19, 21) d'une même cathode délimitant un espace rempli d'un matériau granulaire actif et dans lequel est disposée une grille métallique (20) d'amenée de courant, caractérisée en ce que, le métal constituant ladite grille métallique (20) d'amenée de courant étant choisi parmi les métaux présentant un potentiel d'oxydoréduction supérieur à celui dudit métal lourd à électrodéposer, ladite installation comprend en outre un réacteur électrochimique de régénération destiné à recevoir lesdites cathodes (110) en position anodique.

2. Installation électrochimique selon la revendication 1, caractérisée en ce que ledit métal constituant la grille métallique d'amenée de courant est du titane.

3. Installation électrochimique selon l'une des revendications 1 ou 2, caractérisée en ce que ledit matériau granulaire actif est du coke de pétrole.

4. Procédé de traitement d'un effluent aqueux contenant un métal lourd, caractérisé en ce qu'il consiste :
- à soumettre ledit effluent aqueux à une électrolyse dans un réacteur d'électrodéposition d'une installation électrochimique selon l'une quelconque des revendications 1 à 3,
- à retirer les cathodes volumiques (110) de ladite cuve, lorsque le matériau granulaire actif est saturé en métal lourd,
- à placer lesdites cathodes (110) dans le réacteur électrochimique de régénération et les soumettre à un potentiel anodique de façon à résolubiliser ledit métal lourd et régénérer ledit matériau granulaire actif, le métal lourd résolubilisé étant récupéré sur des électrodes (120) en position cathodique,
- et, après régénération, à placer à nouveau lesdites cathodes volumiques (110) dans ledit réacteur d'électrodéposition.
